# EUROPÄISCHE PATENTSCHRIFT

(11) **EP 2 431 144 B1**
(45) Veröffentlichungstag und Bekanntmachung des Hinweises auf die Patenterteilung: **31.10.2012**
(21) Anmeldenummer: 10009614.8
(22) Anmeldetag: 15.09.2010
(51) Int. Cl.: B27N 1/02

(54) **Verfahren und Einrichtung zur Nassbeleimung von Holzfasern**
Method and device for wet gluing wood fibres
Procédé et dispositif destinés au collage humide de fibres en bois

(43) Veröffentlichungstag der Anmeldung: 21.03.2012
(73) Patentinhaber: Kronotec AG, 6006 Luzern (CH)
(72) Erfinder:
(74) Vertreter: Rehmann, Thorsten

(56) Entgegenhaltungen:
- EP-A2- 0 728 562
- EP-A2- 1 022 103
- WO-A1-2009/116877
- DE-A1- 19 740 676
- DE-A1- 19 930 800
- DE-U1-202008 015 419
- US-A1- 2004 065 758

## Beschreibung

Verfahren zur Nassbeleimung von Holzfasern, die zuvor in einem Refiner aus zu Schnitzeln zerkleinertem Holz zerfasert wurden, damit diese nach der Nassbeleimung in einer Beleimungszone in einem Trockner getrocknet, anschließend in einer Streuvorrichtung zu einem Faserkuchen gestreut und in einer Heißpresse zu einer Holzwerkstoffplatte gewünschter Dicke verpresst werden können, wobei die Holzfasern innerhalb eines Förderrohres in einem Strom aus gesättigtem Dampf in die Beleimungszone transportiert werden.

Das Verfahren zur Nassbeleimung wird auch "Blowline"-Beleimungsverfahren genannt. Bei diesem Verfahren wird der Klebstoff in das Förderrohr oder Blasrohr (Blowline) gesprüht, in dem der Fasertransport vom Refiner zum Trockner erfolgt. In "Deppe/Ernst, MDF - Mitteldichte Faserplatten" DRW-Verlag, ISBN 3-87181-329-X wird die Nassbeleimung auf Seiten 81 bis 84 ausführlich beschrieben. Das Prinzip besteht darin, dass der Klebstoff (Leim) in einen Faserstrom gedüst wird, der sich mit einer Geschwindigkeit von 150 bis 500m/s bewegt. Bei der aus der DE 20 2008 015 419 U1 bekannten Einrichtung zur Nassbeleimung wird durch eine Verringerung des Blasrohrquerschnittes an der Eindüsstelle die Fasergeschwindigkeit weiter erhöhen. Die Leimdüsen sind senkrecht zur Fasertransportrichtung oder in einem spitzen Winkel zur Blowline angeordnet. Bekannt sind auch Einrichtungen, bei denen mehrere Beleimungsdüsen verwendet werden, die ringförmig in der Beleimungszone angeordnet sind.

Als Klebstoffe werden hauptsächlich Harnstoff-Formaldehydharze (UF) verwendet. Alternativ dazu können diese Harze auch Melamin und/oder Phenol verstärkt ausgeführt sein (MUF, MUPF) für Holzwerkstoffplatten für besondere Anwendungen werden auch Methylendiphenyldiisocyanate (MDI) als Klebstoffe vorgesehen.

Bei einer Blowline mit einem konstanten Leistungsquerschnitt muss der Klebstoff in einem relativ kurzen Streckenabschnitt dosiert werden, wodurch sich keine homogene Klebstoffaufbringung im Faserstrom einstellen kann, was auf einen Schatteneffekt zurückzuführen ist. Verfahrensbedingt kann keine zusätzliche Zerstäubungsenergie durch ein Treibmedium aufgebracht werden, was einerseits eine ungünstige Verteilung der Klebstoffe auf der einzelnen Faser zur Folge hat und andererseits zu einer nicht kontrollierbaren Tröpfelgröße führt. Hieraus resultiert dann letztendlich eine Verstopfungsanfälligkeit an der Einleitungsstelle durch große Öffnungen und dadurch die Möglichkeit des Eintritts von Fasern gegen die Klebstoffflussrichtung.

Wenn der Querschnitt in der Blowline reduziert wird, wird zwar die Tröpfchengröße verringert, indem ein weiteres Medium bei der Verdüsung benutzt werden kann, was beispielsweise in der WO 2009/116877 beschrieben ist. Durch den kompakteren Faserstrom verstärkt sich aber die Schattenwirkung nach der Querschnittreduzierung, der vom Klebstoffstrahl nur schwer und unzureichend durchdrungen werden kann. Aufgrund der Erhöhung der Geschwindigkeit verkürzt sich die Verweilzeit der Fasern in der Beleimungszone, wodurch es notwendig werden kann, die Klebstoffmenge zu erhöhen, um eine ausreichende Beleimung der einzelnen Fasern zu erreichen. Außerdem muss bei diesem Verfahren der Refiner einen größeren Gegendruck überwinden (zusätzlicher Flaschenhals in der Beleimungszone), wodurch die maximale Durchsatzmenge der Gesamtanlage reduziert wird. Durch den höheren Gegendruck in der Beleimungszone und dem entsprechend niedrigen Druckunterschied zwischen dem mit dem Treibmedium durch die Düsen gepressten Klebstoff und dem Druck im Faserstrom wird die Wirksamkeit des Treibmediums reduziert.

Allein aus Kostengründen ist man bestrebt, Leim einzusparen. Außerdem besteht die Gefahr, dass sich (zuviel eingedüster) Leim der sich nicht mit einzelnen Fasern verbinden kann an der Wandung der Blowline festsetzt und diese sich dadurch mit der Zeit verstopft.

Aus der DE 199 30 800 A1 ist es bekannt, bei der Trockenbeleimung von Fasern durch eine Vergrößerung des Rohrtrockner-Strömungsquerschnittes die Transportgeschwindigkeit des Fasergemisches zu reduzieren und dadurch eine turbulente Strömung zu erzeugen, deren Turbulenz durch Eindüsung zusätzlicher Luft erhöht wird wenn der Leim eingedüst wird.

Um bei einer Trockenbeleimung eine feine Benetzung zu gewährleisten ist es aus der EP 0 728 562 A2 bekannt, die Düsen in einem Bereich der Förderleitung anzuordnen, der eine diffusorartige Querschnittserweiterung aufweist.

Aus der US 2004/0065758 A1 ist es bekannt, bei der Trockenbeleimung zur Beruhigung des Faserstromes das Förderrohr sich am Anfang der Beleimungszone, innerhalb der sich eine Mehrzahl von Beleimungsdüsen befindet, aufweitet, wodurch die Geschwindigkeit des Faserstromes noch vor dem Erreichen der ersten Beleimungsdüse reduziert wird.

Dokument DE-A-197 40 676 offenbart ein Verfahren zur Nassbeleimung von Holzfasserm gemäß dem Oberbegriff des Anspruchs 1.

Ausgehend von den vorstehend beschriebenen Problemen soll das Verfahren zur Nassbeleimung von Holzfasern verbessert werden, sodass eine bessere Beleimung der nassen Holzfasern und gegebenenfalls dabei auch eine Einsparung von Klebstoff erreicht werden kann.

Zur Problemlösung zeichnet sich ein gattungsgemäßes Verfahren dadurch aus, dass zur Beruhigung des Faserstromes das Förderrohr sich am Anfang der Beleimungszone, innerhalb der sich eine Mehrzahl von Beleimungsdüsen befindet, aufweitet, wodurch die Geschwindigkeit des Faserstromes noch vor dem Erreichen der ersten Beleimungsdüse reduziert wird, die Fasern in dem beruhigten Faserstrom mittels der Beleimungsdüsen Klebstoff beleimt und dann dem Trockner zugeführt werden.

Durch einen geringeren Druck in der Blowline in der Beleimungsstrecke und einem daraus resultierenden größeren Druckunterschied zwischen dem Druck des eingedüsten Klebstoffs und dem Druck in der Blasleitung wird der Einsatz des Treibmediums effektiver und der Klebstoffverbrauch reduziert. Durch die Reduzierung der Geschwindigkeit innerhalb der Beleimzone hat der Faserstrom eine größere Verweilzeit im Bereich der Düsen, wodurch die Fasern homogener mit Leim benetzt werden. In Folge des nicht mehr so kompakten Faserstromes wird auch die Schattenwirkung reduziert.

Vorzugsweise weitet sich der Rohrquerschnitt zu Beginn der Beleimungszone um bis zu 30% auf.

Am Ende der Beleimungszone ist es vorteilhaft, hinter der letzten Beleimungsdüse den Querschnitt des Förderrohres wieder zu reduzieren, wodurch sich die Geschwindigkeit wieder erhöht und der beleimte Faserstrom schneller dem Trockner zugeführt wird.

Vorzugsweise wird der Leim den Beleimungsdüsen mit Umgebungstemperatur und insbesondere vorzugsweise unter erhöhtem Druck zugeführt.

Eine Einrichtung zur Nassbeleimung zum Beleimen von in einem Strom aus gesättigtem Dampf transportierten Holzfasern in dem Verfahren nach einem der vorstehenden Ansprüche, mit einem Förderrohr in dem in einer Beleimungszone eine Mehrzahl von Beleimungsdüsen in Strömungsrichtung betrachtet hintereinander angeordnet sind dadurch aus, dass sich der Querschnitt des Rohres vor der ersten Beleimungsdüse um bis zu 30% aufweitet.

Mit Hilfe einer Zeichnung soll ein Ausführungsbeispiel der Erfindung nachfolgend näher erläutert werden. Es zeigt:
- Figur 1 -: den prinzipiellen Verfahrensablauf anhand eines Flussdiagramms,

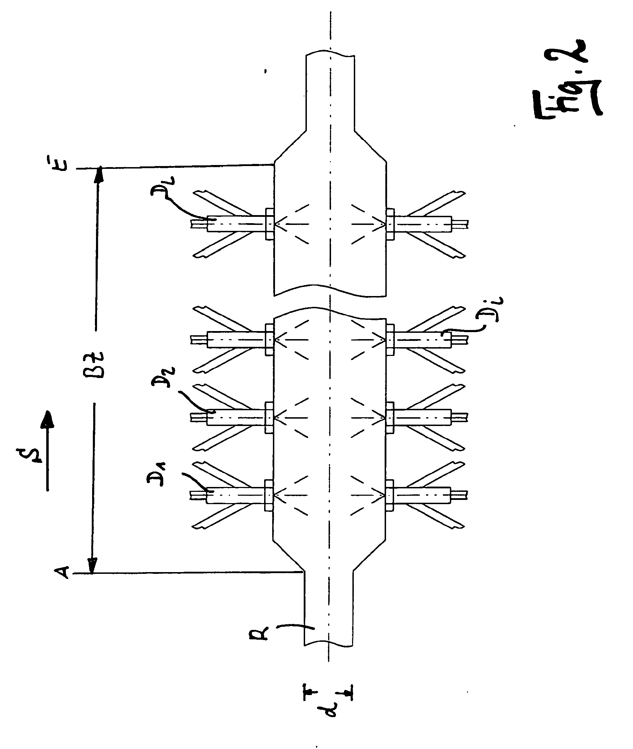

- Figur 2 -: den mit 11 bezeichneten Ausschnitt aus Figur 1.

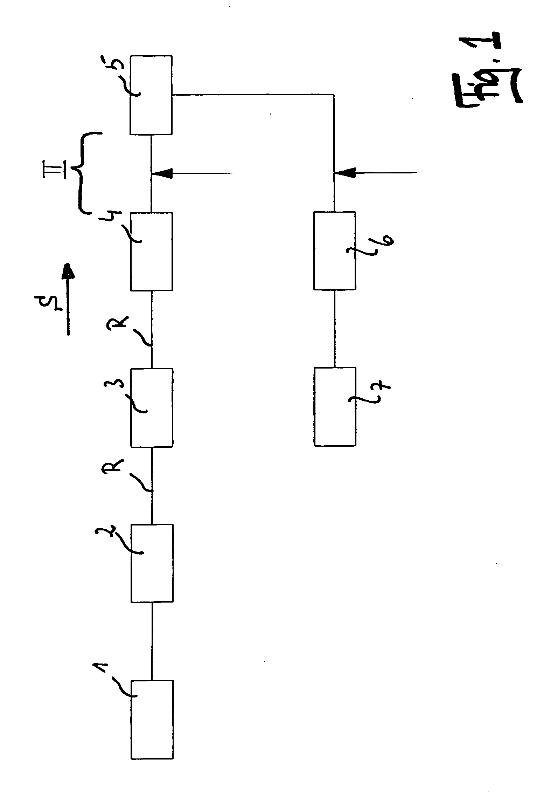

An der mit 1 gekennzeichneten Stelle wird zunächst Rundholz oder dergleichen bereitgestellt und in dem Zerkleinerer 2 zu Holzhackschnitzeln verarbeitet, die anschließend im Kocher 3 aufgeschlossen und dann im Refiner 4 zu Fasern zerfasert werden. Die im Refiner 4 zerfaserten Holzfasern werden anschließend über das Förderrohr R in eine Beleimungszone BZ gefördert, in der eine Mehrzahl von Beleimungsdüsen D₁, D₂,...DL ringförmig um das Rohr (Blowline) angeordnet sind. Am Anfang A der Beleimungszone BZ erweitert sich der Rohrquerschnitt d - betrachtet in Strömungsrichtung S - noch vor der ersten Beleimungsdüse D₁ um bis zu 30%. Die Geschwindigkeit des Faserstromes wird dadurch reduziert und die Verweildauer in der Beleimungszone BZ erhöht. Am Ende E der Beleimungszone BZ wird in Strömungsrichtung S betrachtet hinter der letzten Beleimungsdüse D_{L} der erweiterte Rohrquerschnitt wieder reduziert und der Holzfaserstrom dann dem Trockner 5 zugeführt, wo die Fasern von dem Dampf getrennt und getrocknet werden. Nach dem Trockner 5 werden die getrockneten Holzfasern einer Streuvorrichtung 6 zugeführt, wo sie zu einem Faserkuchen gestreut werden. Der Faserkuchen wird dann einer Heißpresse 7 zugeführt, in der er unter hohem Druck und hoher Temperatur zu einer Holzwerkstoffplatte gewünschter Dicke verpresst wird. An der mit einem Pfeil gekennzeichneten Stelle in Figur 1 können die getrockneten Fasern nochmals beleimt werden, mit Verfahren, die bei der Trockenbeleimung (vgl. DE 199 30 800 A1) üblich sind.

### Bezugszeichenliste

- 1: Bereitstellen von Holz
- 2: Zerkleinerungsvorrichtung
- 3: Kocher
- 4: Refiner
- 5: Trockner
- 6: Streuvorrichtung
- 7: Heißpresse
- A: Anfang
- BZ: Beleimungszone
- D₁: erste Beleimungsdüse
- D₂: Beleimungsdüse
- Dᵢ: Beleimungsdüse
- D_{L}: letzte Beleimungsdüse
- d: Rohrquerschnitt
- E: Ende
- R: Förderrohr
- S: Strömungsrichtung

## Patentansprüche

1. Verfahren zur Nassbeleimung von Holzfasern, die zuvor in einem Refiner (4) aus zu Schnitzeln zerkleinertem Holz zerfasert wurden, damit diese nach der Nassbeleimung in einer Beleimungszone (BZ) in einem Trockner (5) getrocknet, anschließend in einer Streuvorrichtung (6) zu einem Faserkuchen gestreut und in einer Heißpresse (7) zu einer Holzwerkstoffplatte gewünschter Dicke verpresst werden können, wobei die Holzfasern innerhalb eines Förderrohres (R) in einem Strom aus gesättigtem Dampf in die Beleimungszone (BZ) transportiert werden, **dadurch gekennzeichnet, dass**
- zur Beruhigung des Faserstromes das Förderrohr (R) sich am Anfang (A) der Beleimungszone (BZ), innerhalb der sich eine Mehrzahl von Beleimungsdüsen (D₁, D₂.... Dᵢ.... D_{L}) befindet, aufweitet, wodurch die Geschwindigkeit des Faserstromes noch vor dem Erreichen der ersten Beleimungsdüse D₁ reduziert wird,
- die Fasern in dem beruhigten Faserstrom mittels der Beleimungsdüsen (D₁, D₂,...Dᵢ,...D_{L}) mit Klebstoff beleimt und dann
- dem Trockner (5) zugeführt werden.

2. Verfahren nach Anspruch 1, **dadurch gekennzeichnet, dass** sich der Rohrquerschnitt am Anfang (A) der Beleimungszone um bis zu 30% aufweitet.

3. Verfahren nach Anspruch 1 oder 2, **dadurch gekennzeichnet, dass** am Ende (E) der Beleimungszone hinter der letzten Beleimungsdüse (D_{L}) der Querschnitt des Förderrohres (R) reduziert wird, wodurch sich die Geschwindigkeit des Faserstroms wieder erhöht.

4. Verfahren nach einem der Ansprüche 1 bis 3, **dadurch gekennzeichnet, dass** der Leim mit Umgebungstemperatur den Beleimungsdüsen (D₁, D₂, ... Dᵢ, ... D_{L}) zugeführt wird.

5. Verfahren nach einem der Ansprüche 1 bis 4, **dadurch gekennzeichnet, dass** der Leim über die Düsen (D₁, D₂;..Dᵢ;,...D_{L}) mit Überdruck in den Faserstrom eingespritzt wird.

6. Einrichtung zum Beleimen von in einem Strom aus gesättigtem Dampf transportierten Holzfasern in dem Verfahren nach einem der vorstehenden Ansprüche, mit einem Förderrohr (R) in dem in einer Beleimungszone (BZ) eine Mehrzahl von Beleimungsdüsen (D₁, D₂ .... Dᵢ,... D_{L}) in Strömungsrichtung (S) betrachtet hintereinander angeordnet sind und sich der Querschnitt des Rohres (E) vor der ersten Beleimungsdüse (D₁) um bis zu 30% aufweitet.

7. Einrichtung nach Anspruch 6, **dadurch gekennzeichnet, dass** der Rohrquerschnitt (d) sich um bis zu 30% aufweitet.

8. Einrichtung nach Anspruch 6 oder 7, **dadurch gekennzeichnet, dass** der Rohrquerschnitt (d) hinter der letzten Beleimungsdüse (D_{L}) des Förderrohres (R) wieder reduziert wird.

## Claims

1. Method for wet gluing wood fibres, which have previously been defibered in a refiner (4) from wood broken down into chips, in order that, following the wet gluing in a gluing zone (BZ), these can be dried in a dryer (5), then scattered in a scattering apparatus (6) to form a fibre cake and pressed in a hot press (7) to form a wood material board of desired thickness, the wood fibres being transported into the gluing zone (BZ) within a conveyor pipe (R) in a stream of saturated steam, **characterized in that**
- in order to calm the fibre stream, the conveyor pipe (R) at the start (A) of the gluing zone (BZ), within which there is a plurality of gluing nozzles (D₁, D₂, ... Dᵢ, ... D_{L}), widens, by which means the speed of the fibre stream is reduced before reaching the first gluing nozzle D₁,
- the fibres in the calmed fibre stream are glued with adhesive by means of the gluing nozzles (D₁, D₂, ... Dᵢ, ... D_{L}), and then
- are fed to the dryer (5).

2. Method according to Claim 1, **characterized in that** the pipe cross section widens by up to 30% at the start (A) of the gluing zone.

3. Method according to Claim 1 or 2, **characterized in that** the cross section of the conveyor pipe (R) is reduced at the end (E) of the gluing zone after the last gluing nozzle (D_{L}), by which means the speed of the fibre stream is increased again.

4. Method according to one of Claims 1 to 3, **characterized in that** the glue is fed to the gluing nozzles (D₁, D₂, ... Dᵢ, ... D_{L}) at ambient temperature.

5. Method according to one of Claims 1 to 4, **characterized in that** the glue is injected into the fibre stream via the nozzles (D₁, D₂, Dᵢ, ... D_{L}) at a positive pressure.

6. Device for gluing wood fibres transported in a stream of saturated steam in the method according to one of the preceding claims, having a conveyor pipe (R) in which, in a gluing zone (BZ), a plurality of gluing nozzles (D₁, D₂, .... Dᵢ, ... D_{L}) are arranged one after another as viewed in the flow direction (S), and the cross section of the pipe (E) widens by up to 30% before the first gluing nozzle (D₁).

7. Device according to Claim 6, **characterized in that** the pipe cross section (d) widens by up to 30%.

8. Device according to Claim 6 or 7, **characterized in that** the pipe cross section (d) is reduced again after the last gluing nozzle (D_{L}) of the conveyor pipe (R).

## Revendications

1. Procédé destiné à l'encollage humide de fibres de bois ayant été préalablement défibrées dans un raffineur (4) à partir de bois réduit en copeaux afin que celles-ci puissent être, après encollage humide dans une zone d'encollage (BZ), séchées dans un sécheur (5), puis répandues en une galette de fibres dans un dispositif d'épandage (6) et pressées dans une presse à chaud (7) en un panneau de matériau dérivé du bois d'une épaisseur souhaitée, les fibres de bols étant transportées dans la zone d'encollage (BZ) à l'intérieur d'un tuyau de convoyage (R), dans un courant de vapeur saturée, **caractérisé en ce que** :
- pour tranquilliser le courant de fibres, le tuyau de convoyage (R) s'élargit au commencement (A) de la zone d'encollage (BZ), à l'intérieur de laquelle se trouvent plusieurs buses d'encollage (D₁, D₂, ...Dᵢ, .. D_{L}), ce qui permet de réduire la vitesse du courant de fibres dès avant qu'il atteigne la première buse d'encollage D₁,
- on encolle avec une colle les fibres dans le courant de fibres tranquillisé, au moyen des buses d'encollage (D₁, D₂, ... Dᵢ, ... D_{L}), puis
- on les amène au sécheur (5).

2. Procédé selon la revendication 1, **caractérisé en ce que** la section du tuyau s'élargit de jusqu'à 30% au commencement (A) de la zone d'encollage.

3. Procédé selon la revendication 1 ou 2, **caractérisé en ce que** l'on réduit la section du tuyau de convoyage (R) à la fin (E) de la zone d'encollage derrière la dernière buse d'encollage (D_{L}), ce qui augmente à nouveau la vitesse du courant de fibres.

4. Procédé selon l'une quelconque des revendications 1 à 3, **caractérisé en ce que** l'on amène la colle à la température ambiante aux buses d'encollage (D₁, D₂, ...Dᵢ, ... D_{L}).

5. Procédé selon l'une quelconque des revendications 1 à 4, **caractérisé en ce que** l'on injecte avec surpression la colle dans le courant de fibres, par les buses (D₁, D₂, ...Dₗ,, ... D_{L}).

6. Dispositif pour l'encollage de fibres de bois transportées dans un courant de vapeur saturée par un procédé selon l'une quelconque des revendications précédentes, comprenant un tuyau de convoyage (R) dans lequel sont agencées, dans une zone d'encollage (BZ), plusieurs buses d'encollage (D₁, D₂, ...D_{I},, ... D_{L}) les unes derrière les autres relativement à la direction du courant (S), et la section du tuyau (E) s'élargit de jusqu'à 30° avant la première buse d'encollage (D₁).

7. Dispositif selon la revendication 6, **caractérisé en ce que** la section du tuyau (d) s'élargit de jusqu'à 30%.

8. Dispositif selon la revendication 6 ou 7, **caractérisé en ce que** la section du tuyau (d) est de nouveau réduite derrière la dernière buse d'encollage (D_{L}) du tuyau de convoyage (R).
